# EUROPEAN PATENT SPECIFICATION

(11) **EP 1 722 437 B1**
(45) Date of publication and mention of the grant of the patent: **08.10.2008**
(21) Application number: 06252258.6
(22) Date of filing: 27.04.2006
(51) Int. Cl.: H01M 10/04, H01M 10/14

(54) **An enveloper for battery plates**
Vorrichtung zum Eintaschen von Batterieplatten
Dispositif pour l'enveloppement de plaques de batteries

(30) Priority: 12.05.2005 GB 0509645
(43) Date of publication of application: 15.11.2006
(60) Divisional application: 08000452.6
(73) Proprietor: TBS ENGINEERING LIMITED, Cheltenham, Gloucestershire GL51 9TY (GB)
(72) Inventor: Hopwood, Robert Timothy, Highbridge, Somerset TA9 3RH (GB); Barge, Christopher Stephen, Stapleton, Bristol BS16 1WL (GB); Phillips, Mark, Cheltenham, Glos GL52 8TG (GB)
(74) Representative: Dunlop, Brian Kenneth Charles

(56) References cited:
- EP-A- 0 397 640
- WO-A-92/02055
- US-A- 4 314 403
- US-A- 6 095 316

## Description

This invention relates to envelopers for creating a material envelope around a battery plate and apparatus for forming groups of battery plates.

In the manufacturer of lead acid, and similar, batteries it is known to have to assemble groups of battery plates for insertion in the compartments of the battery box. Frequently alternate plates are enveloped in porous separator material, although at times it is necessary that adjacent plates are both enveloped or that there may be an unenveloped pair in the group. Apparatus is therefore provided for assembling appropriate groups and typically there is an upstream plate feeder, which feeds plates onto a central conveyor upstream of an enveloper, which envelopes the plates coming down that section of the conveyor. One or more further plate feeders are provided downstream of the enveloper so that the desired sequence of enveloped and unenveloped plates travel down the conveyor. Conveniently these may be timed to form mini stacks of plates e.g. positive and negative plates, with one enveloped and one not. At the end of the main conveyor the plates pass into a pocketed conveyor, which is timed to receive the desired group of plates within its respective pocket.

Developments, such as those described in European Patent Application 05250059.2 have enabled such group forming apparatus to operate at significant speeds and with reduced labour. However, these developments have, in a sense, highlighted difficulties both with the precision of existing envelopers and the downtime and labour required to convert such group forming apparatus when it is necessary to process different plate sizes and/or different enveloping materials. At present such work has to be carried out, on each occasion, by a highly skilled fitter.

From one aspect the invention consists in an enveloper for creating a material envelope around a battery plate, including an anvil and a rotatable cut-and-crease roller having a knife and a generally diametrically opposed crease blade for acting against the anvil to cut-and-crease material fed through the enveloper characterised in that the enveloper further includes a control for varying the rotational velocity of the roller during a rotational cycle to position the crease to form a symmetrical envelope around a plate passing through the enveloper.

It is particularly preferred that the cut-and-crease roller is driven by a servomotor, in which case the control may include an input for adjusting the rotational velocity to compensate for a "long on top" condition and/or a "short on top" condition.

For the purposes of this specification "long on top" is the condition when, when viewed from above, the envelope material covering the upper surface of an envelope plate extends beyond the top edge of the body of the plate and at least partially covers the plate terminal. Conversely "short on top" is the condition when viewed from above the material of an envelope plate leaves some of the main body of the plate exposed. The desired condition is for the material to sit symmetrically about the plate and to terminate, on each side, level with the upper edge of the main body of the plate.

The apparatus may include a recognition unit for determining the presence of a "long on top" or "short on top" condition and for feeding a respective control signal to the control. In that case it would be possible to have the apparatus adjusted in substantially real time, whilst running, but the more normal operation will be for a few test plates to be fed through the enveloper and then examined by the operator or recognition unit. Depending on the condition detected the rotational velocity will be adjusted as indicated above.

It is particularly preferred that the control includes a memory for retaining a velocity profile for a particular plate/material combination, because in that case, when the operator wishes to run the machine at a future time using that plate and material combination, it can be automatically reset the stored parameters.

The enveloper for creating material envelope around a battery plate may include a pair of feed rollers for feeding the material into a enveloping station of the enveloper, one of the feed rollers being driven by a motor characterised in that the motor is a servomotor and in that the enveloper further includes a control for controlling the rate of rotation of the feed roller to adjust the length of material formed into an envelope by the enveloping station.

The control may have a memory for retaining the rotational speeds for any material/plate combination. As indicated before this will assist with resetting.

The anvil may be displacably mounted to allow adjustment of a gap between the anvil and the cut-and-crease roller to vary the depth of crease formed in material fed through the gap.

This embodiment is concerned with a problem relating to the depth of crease. It if is too deep, the material is cut through; if it is too shallow a proper and accurate crease is not made. Attempts have been made to overcome this problem by spring-loading the blade, but these have been unsuccessful. Currently, therefore a skilled operator has to adjust the crease blade position using trial and error. This is particularly difficult, because the crease blade must be maintained parallel with the surface of the roller, or else the crease depth will not be consistent across the envelope. The Applicants approach of adjusting the gap between the anvil and the crease roller is a significant departure from the prior art approaches.

It is preferred that the anvil is pivotally mounted about an axis at a position off-set from the gap. In that case the invention may include a rotatable eccentric located on the opposite side of the gap from the axis to displace the anvil by rotation about the axis. This means that the adjustment of the anvil can be both controlled and repeatable. Spring means are preferably provided for urging the anvil against the eccentric and this eccentric is conveniently rotated by a servomotor.

The enveloper may include a control for adjusting the anvil position and hence the gap width to achieve a desired crease depth. Control may include a memory for retaining the anvil positions appropriate for any particular material or material plate combination.

The enveloper may further include a tension roller for tensioning the material prior to cutting and located downstream of the cut-and-crease roller, but upstream of the envelope forming station.

The tension roller may be driven by a servomotor and the servomotor may be controlled by a control having a memory for retaining the appropriate tension setting for a particular material. It is preferred, however, that the tension roller is driven by a drive for the feed rollers, but with a slight geared step up.

From a further aspect the invention consists in apparatus for forming groups of battery plates including a first plate supply for supplying spaced plates, an enveloper as defined above for enveloping in material the plates from the first supply, a second plate supply for supplying unenveloped plates to form stacks of an enveloped plate and an unenveloped plate, a conveyor for conveying the stacks to an outlet and a pocket conveyor for receiving multiple stacks from the outlet for forming groups characterised in that at least a plurality of the above elements has at least one adjustable feature controlled by a respective servomotor to allow for different plate/envelope material combinations and a control for adjusting the servomotors.

The control may include a memory for retaining the control settings for each plate/envelope combination used in the apparatus to allow automatic resetting of the apparatus.

As well as the adjustable features of the enveloper highlighted above, the apparatus may include plate guides, on one or more conveyor, which can be adjusted to accommodate plates of different sizes; adjustable pockets on the pocket conveyor to accommodate groups of different sizes and/or an interrupt device for temporarily retaining one or more stacks of plates, before they are fed into the pocket conveyor. Any such settings can be stored and re-set.

It will be appreciated that the provision of controllable adjustments within the enveloper and other parts of the apparatus for forming groups of battery plates enable rapid and accurate resetting of the apparatus whenever there is a change in the nature of the groups to be manufactured. Downtime and expensive skilled labour is therefore saved. The improvements to the enveloper, in particular, help to ensure very accurate operation even at high speeds.

The invention may be performed in various ways and specific embodiments will now be described, by way of example, with respect to the accompany drawings, in which:
Figure 1 is a planned view of apparatus for forming groups of battery plates;
Figure 2 is a side view of the apparatus of Figure 1;
Figure 3 is a vertical section through an enveloper for use in the apparatus of Figures 1 and 2;
Figures 4a to 4g are schematic views from the side, indicating the operation of the enveloper of Figure 3, but viewed from the other side;
Figures 5a and 5b indicate relative adjustment between an anvil and a cut-and-crease roller of the enveloper of Figure 3;
Figures 6a and 6b indicate the use of a servomotor to achieve that adjustment;
Figure 7 is a side view of the enveloper of Figure 3 when viewed from the opposite side to Figure 3; and
Figure 8 is a schematic diagram of a control system for the apparatus, but showing a single line.

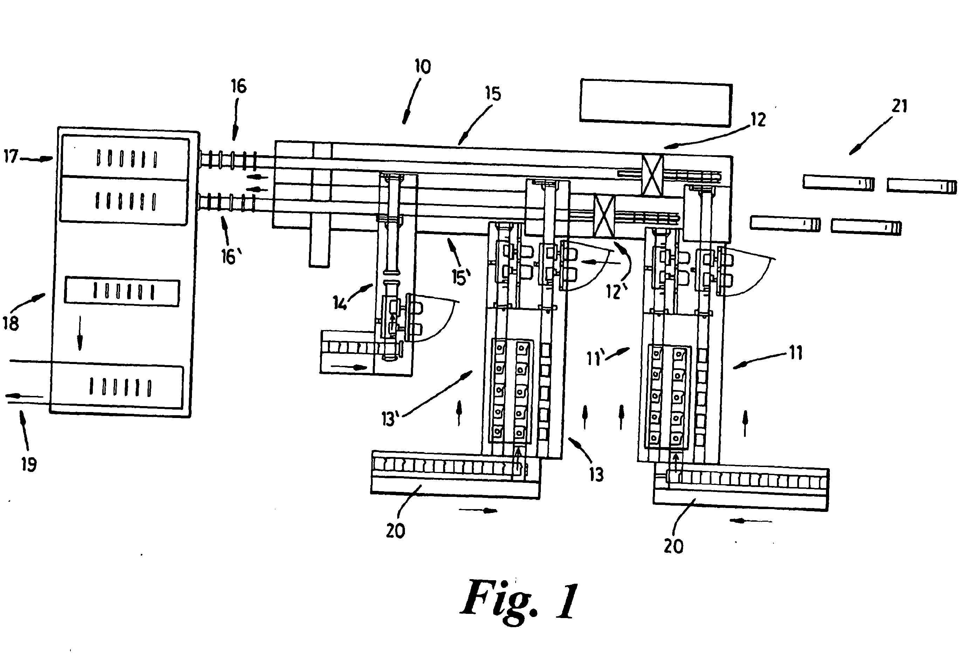

In Figure 1 the apparatus for forming groups is generally indicated at 10 and includes upstream plate supplies 11, 11', envelopers 12, 12', first downstream plate supplies, 13, 13' and an auxiliary plate supply 14. Plate supplies 11, 11' and 13, 13' deliver plates onto respective main conveyors, 15, 15'. Auxiliary plate supply 14, which is more occasionally used, can supply plates onto both conveyors 15, 15'. Plates supplied onto the main conveyors 15, 15' are enveloped at 12, 12' by material taken from reels 21. For many batteries, alternate enveloped and unenveloped plates are required and so the supplies 13, 13' insert an unenveloped plate either between each enveloped plate, or, more conveniently, onto an enveloped plate to form a mini stack. The supply 14 can be used to introduce plates so that they will lie either on top of the unenveloped plate on the stack of effectively lie below the enveloped plate. If a pair of enveloped plates are required immediately adjacent to each other, then the supply 13 is momentarily stopped. Conveyors 15, 15' feed stackers 16, 16' which then enter the buffer 17. Apparatus 18 picks up the groups formed by the stackers 16, 16' alternatively and in this way supply groups to the cast-on strap feed 19, where the groups move forward to a cast-on strap machine (not shown).

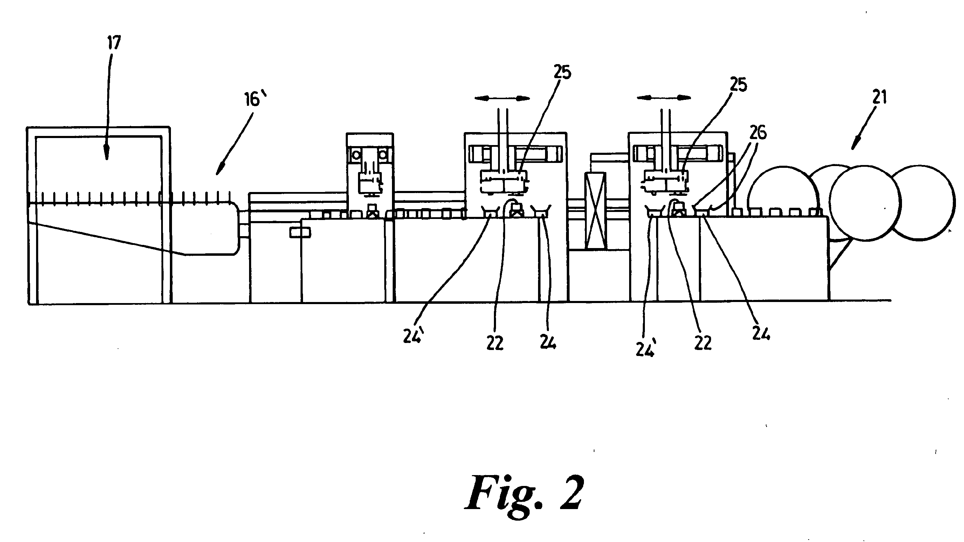

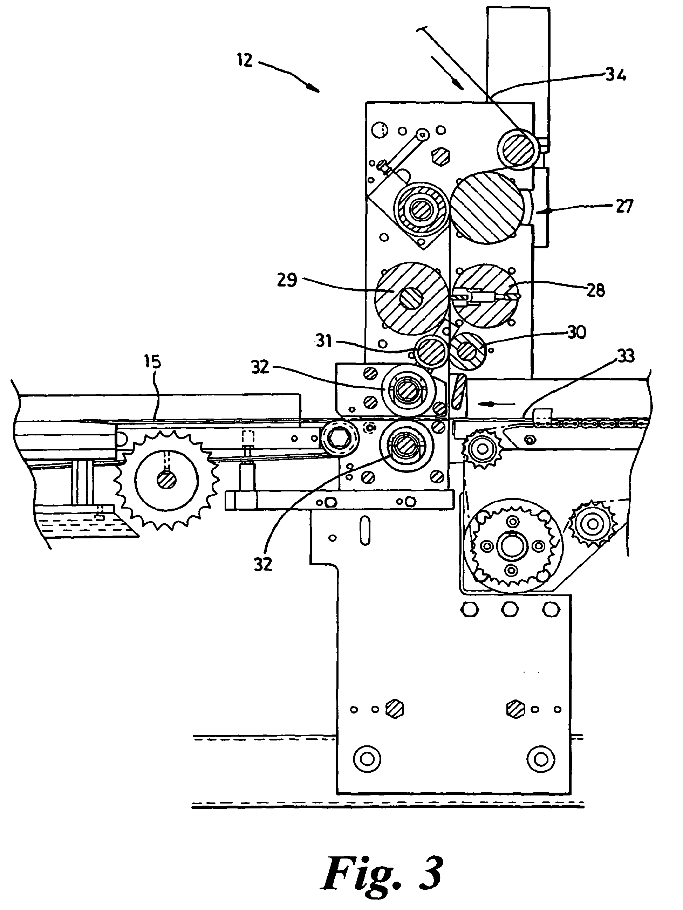

As can best be seen in Figure 2 supplies 11, 11' and 13, 13' have a central conveyor 22 from which plates are picked up by a respective head 25, which then laterally translates to deposit plates onto a conveyor 24', whilst further plates have been picked up for later deposition on conveyor 24' as the head 25 translates in the other direction. It will be seen that each conveyor 24, 24' has guides 26. As is explained below, these may be adjustable. Similar guides exist elsewhere in the apparatus 10. Figure 3 illustrates an enveloper 12, 12' and briefly consists of feed rollers 27 cooperative cut-and-crease roller 28 and anvil 29, a control driven roller 30 and a cooperating idler roller 31, a pair of sealing wheels 32, which include tooth formations for crimping the edges of the envelope in a manner known in the art, and a reciprocating shuttle for feeding the plate off the conveyor 15 towards the sealing rollers 32. The passage of material 34, from the reels 21, through the enveloper 12, 12' is indicated.

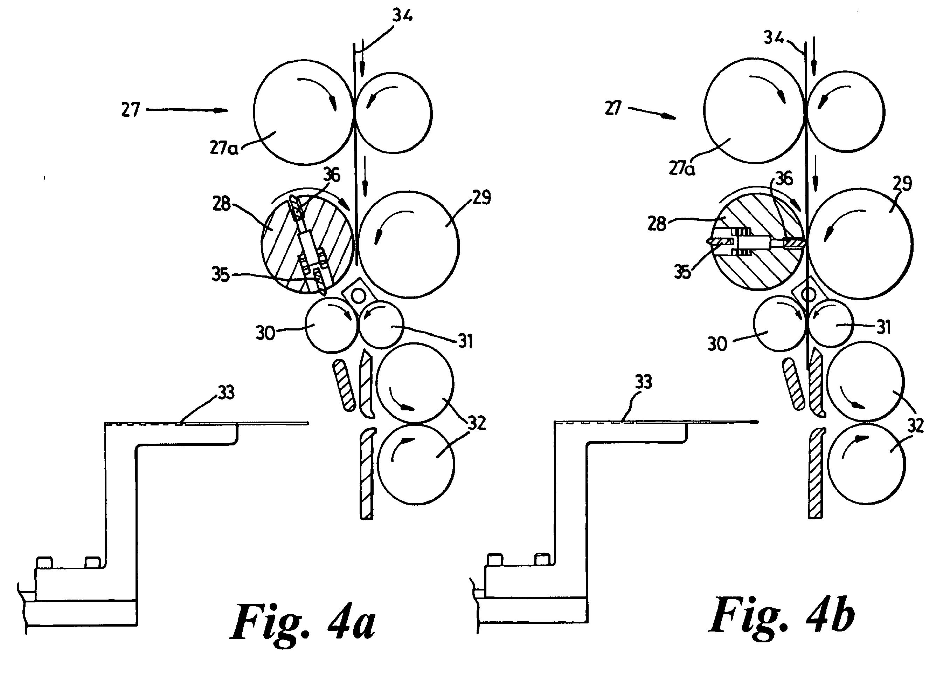

The operation of the enveloper is progressively illustrated in Figures 4a to 4g. In broad outline the enveloper 12 operates in a conventional manner with the feed rollers 27 feeding the material 34 into the nip between the cut-and-crease roller 28 and the anvil 29, the cut-and-crease roller 28 has a knife 35 and a crease blade 36, which is set into the roller at diametrically opposed positions. This position is shown in Figure 4a. As the cut-and-crease roller 28 rotates, the crease blade 36 forms a crease in the material, by acting against the anvil 29, as it passes through the nip between the roller 28 and the anvil 29. This position is shown in Figure 4b.

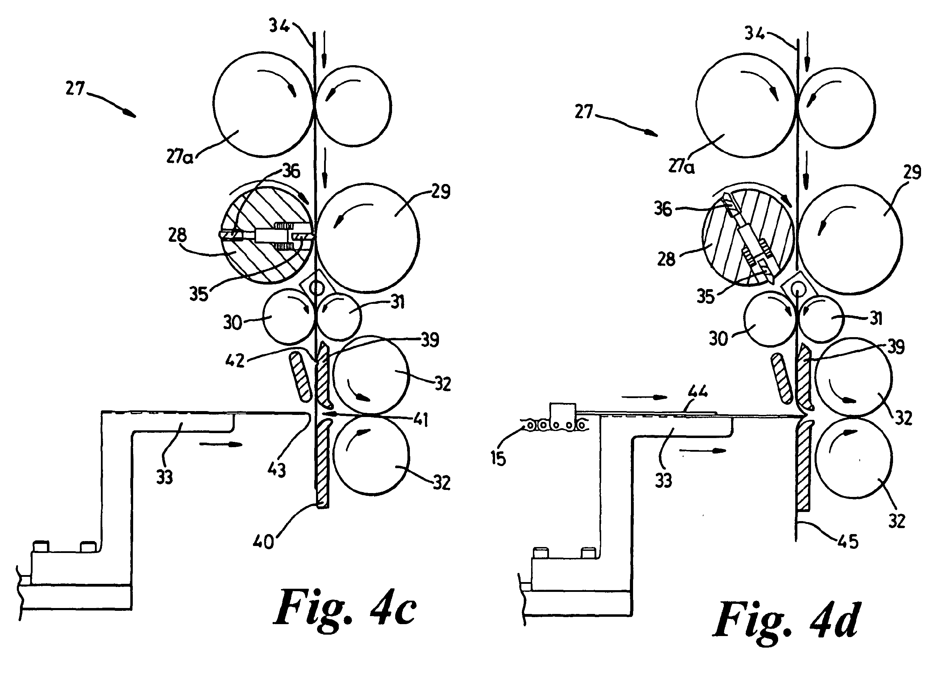

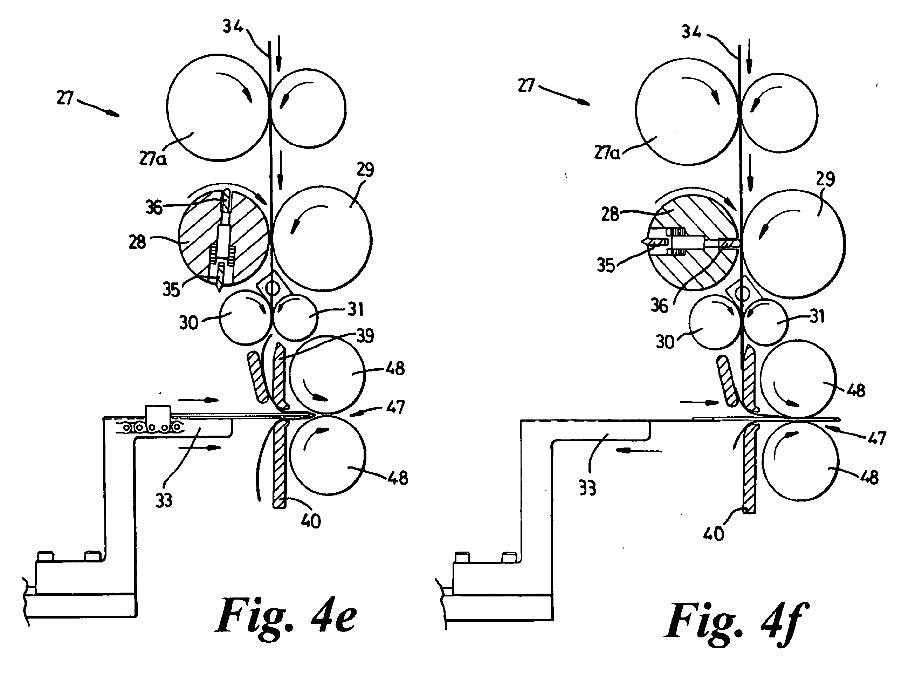

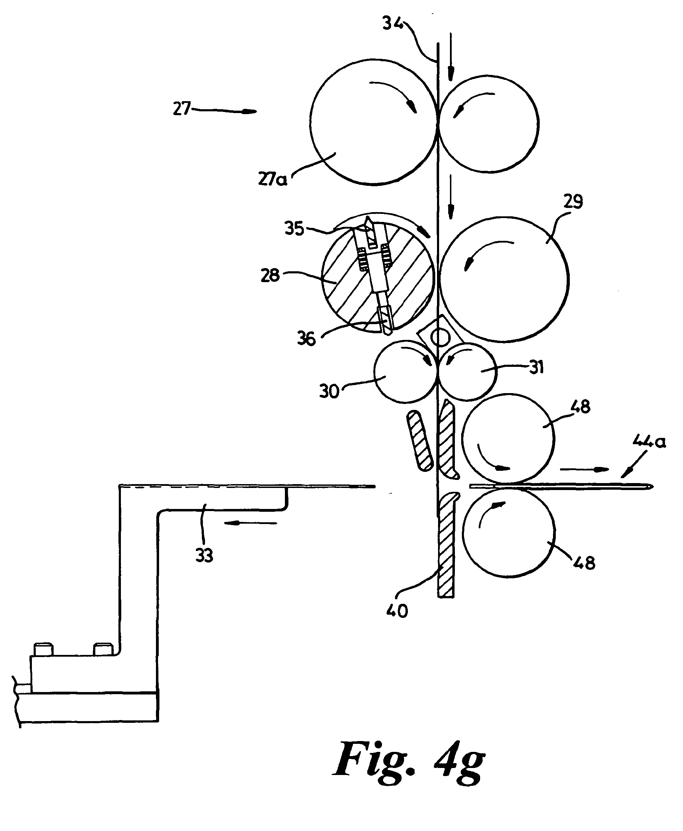

The crease material continues to be fed downwardly past the guides 39, 40, which define a horizontal slot 41 (see Figure 4c). At this point the knife 35 cuts the material against the anvil 29 and the cut material continues to descend past the slot 41 until the crease 42 is aligned with the slot 41. During this period the shuttle 33 has begun to advance towards the slot 41 and as the crease 42 becomes aligned with the slot 41 the leading edge 43 of the shuttle 33 engages in the crease 42 to begin to push the crease into the slot 41. At the same time a plate 44 is delivered onto the shuttle by conveyor 15 (see Figure 4d). As is illustrated in Figure 4e the shuttle 33 carries the plate 44 and the cut piece of material 45 through the slot 41 causing the material 45 to fold around the plate 44 and delivering the material and plate into the nip 47 of two sealing rollers 48 that remove the plate 44 and material 45 from the now retracting shuttle 33 (see Figure 4f) to deliver the fully enveloped plate 44a as shown in Figure 4g. The edges of the cut material 45 are crimped together using toothed wheels in a manner known to those skilled in the art.

As described above the elements of the enveloper are entirely conventional, but the Applicants' enveloper has a number of significant differences over the prior art. These will be discussed as follows:

### Crease position adjustment

As has been mention above there are considerable difficulties with conventional machines in setting up the precise circumferential position of the crease blade 36 to ensure that the crease 42 occurs in the right position in the cut piece of material 45. This is because, whilst the section of the material 45, which passes between the roller 28 and anvil 29 between the leading cut and the engagement by the crease blade 36, is free of drag, the crease blade 36 drags the material 45 for a short time setting up the difference in the time the trailing half of the material takes to pass through the nip. Differences in the thickness, profiling and chemical make-up of the enveloping material 34 can result in the crease 42 being formed either too early or too late resulting in the "short on top" and "long on top" conditions discussed earlier. The Applicants have appreciated that surprisingly the very difficult process of altering the crease blade position using shims, which is currently undertaken, can be completely dispensed with by leaving the crease blade where it is and altering the rotational velocity of the cut-and-crease roller 28 during its cycle. If the roller is slowed between the times at which the leading edge of a section of material 45 is cut by the knife 35 and the arrival of the crease blade 36 at the anvil 29, then the underlying piece of the material 45 will be lengthened, compensating for a "long on top" condition. Conversely if this period is shortened, there will be compensation of a "short on top" condition.

Such a driving arrangement could be achieved in a number of ways, but it is particularly convenient to use a servomotor, which can be computer controlled. In this way an operator can adjust the computer control, which will be described in more detail below, to achieve symmetrically enveloped plates. In doing so he records the plate size and material being processed and this setting will be retained by the computer control to allow automatic resetting whenever the operator wants to run that combination through the apparatus again.

### Envelope length adjustment

For different size plates different lengths of envelope may be required and the Applicants have appreciated that by closely controlling the rotational speed of the feed rollers 27, the length of material, that passes between the cut-and-crease roller 28 and anvil 29 in a rotational cycle of the knife 35, is dependent on the speed with which the material is fed. Accordingly by driving the driven feed roller 27a with a servomotor this speed can be closely controlled and the appropriate setting can again be stored for subsequent automatic resetting. As some of the enveloping materials stretch under tension, it may again be desirable to have a non-constant rotational speed of the roller 27a during a single cycle or group of cycles to compensate for such stretching.

### Crease depth adjustment

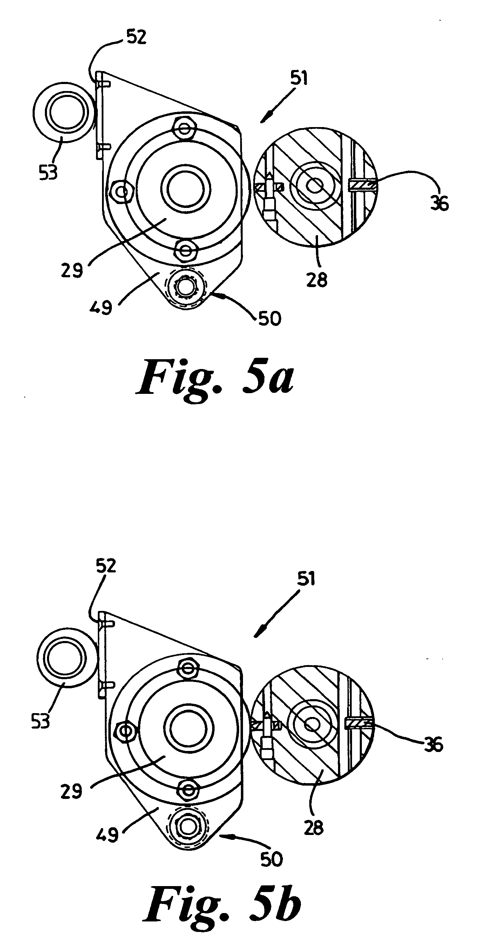

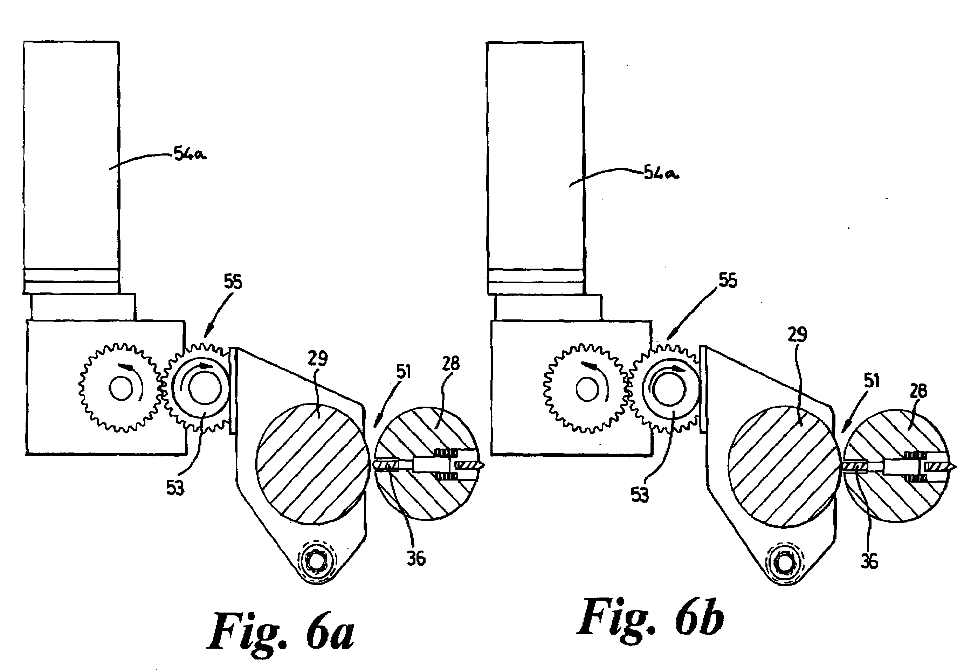

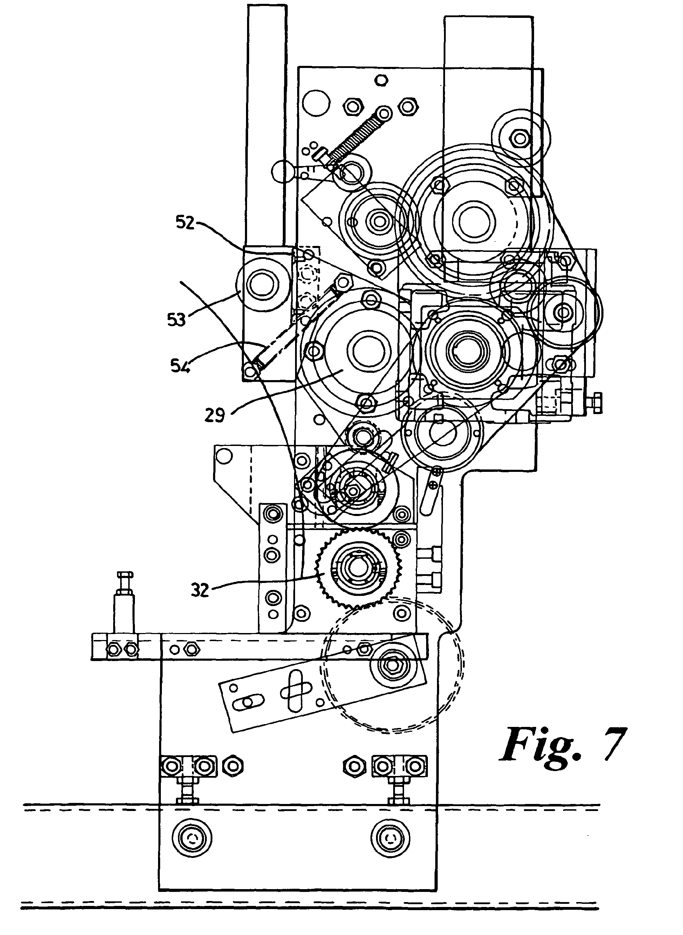

The possibility for adjusting the crease depth is best illustrated in Figures 5 to 7, which view the enveloper 12 from the opposite side to the views shown in Figures 3 and 4. Figure 7 is a view of the complete operational layout, but the arrangement can most simply be seen in Figures 5 and 6. These show that the anvil 29 is mounted on a carrier plate 49, which is itself pivotally mounted at 50. Rocking of the carrier plate about the pivot 50 can vary the width of the gap or nip 51 which exists between the anvil 29 and the cut-and-crease roller 28. The width of the gap 51 determines the depth of the crease formed in the material for a fixed position of the crease blade 36.

On the opposite side of the gap 51, from the pivot 50, the carrier plate 49 has a cam following plate 52 which is located to engage a rotatable eccentric 53. (As can be seen in Figure 7 a spring 54 is provided to urge the plate 52 against the eccentric 53). As can be seen in Figures 5(a) and (b) and 6 (a) and (b) in the Applicants' particular arrangement the gap 51 can vary between 2.3 mm and 0 mm depending on the rotational position of the eccentric 53. Figure 6 illustrates the drive for the eccentric 53 which comprises a servomotor 54 and gear chain 55. The anvil position can therefore be adjusted by the servomotor 54 and the appropriate anvil position for any particular plate/material combination can be stored. This adjustment of the anvil position needs to be compensated for in connection with the knife 35. Spring loading the knife 35 is sufficient in most cases.

### Tension control

Returning to Figure 4, conventional envelopers use an idler roller acting against the upper one of the sealing wheels 32 to retain the cut material as it passes down to be pushed between the rollers 32 by the shuttle 33. The Applicants have appreciated that there are two disadvantages of this system. First the tension in the pre-cut material 34 cannot be controlled, leading to inaccuracies in envelope length and cut-and-crease positions, and further the rate at which the cut section of the material 45 is fed down towards the sealing rollers 32 cannot be controlled. The Applicants have therefore incorporated the driven control roller 30 with the idler 31, which together, as can be seen in the sequential diagrams in Figure 4, initially tension the material 34 and subsequently control the rate of feed of the material 45. conveniently the roller 30 is driven through the feed roller 27a through a slightly stepped up gear chain. Alternatively a servomotor may be used. Either way the rate of rotation of the roller 30 can be precisely controlled and maybe varied depending on whether it is being used to tension the material 34 or feed the material 45. Again the settings for the servomotor can be adjusted on setup and stored for subsequent automatic setup.

The applicants have determined that in fact in may be advantageous to remove the vertical plates which define the nip 41. This is because the crease can sometimes be misplaced by differential friction arising between the material 45 and the respective plates. In fact, the formation of the crease tends to be enhanced, because the material gets deflected against the rollers 32, helping formation of the crease.

### Full machine control

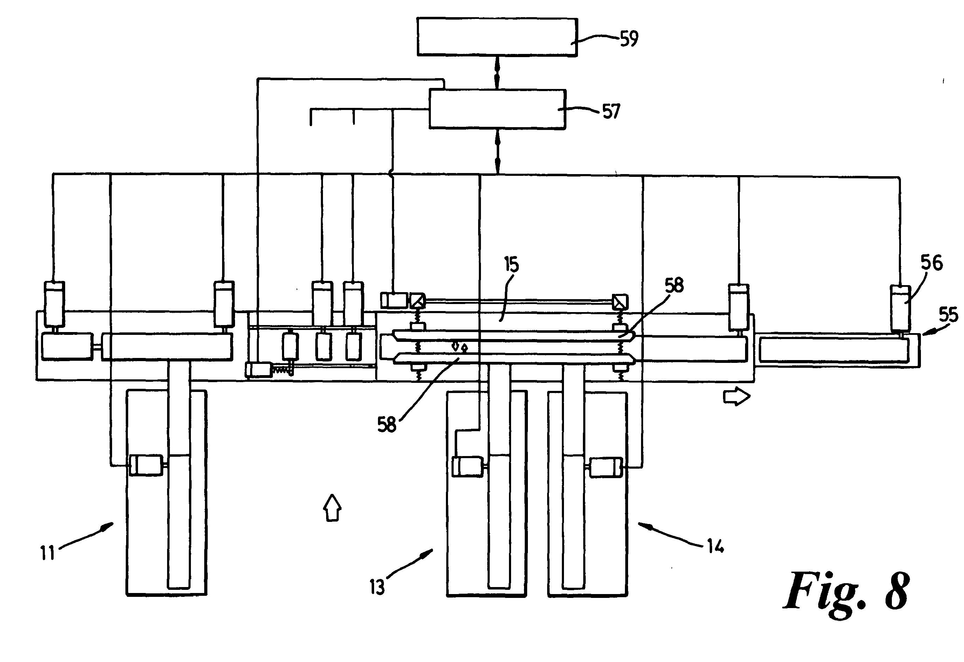

Figure 8 is a controlled diagram for the apparatus 10. It will be noted that servomotors are used throughout the apparatus both as described above, and also to control the speed of the various conveyors and also, at, 55 a servomotor 56 is provided for adjusting the spacing of the pockets on the pocket conveyor 16. Further servomotors are provided to adjust guides 22 and 58. The servomotors are all controlled by a servodrive control system 57 which in turn can be operator controlled through an interface 58. This use of servomotors and controls also enables precise relative adjustments between the operating speeds of the various parts of the apparatus. Thus, in complete contrast to industry practice the Applicants have envisaged the apparatus as a single entity with a large number of controllable adjustable features, rather than considering each element of the apparatus as being a completely independent device, which requires individual setting up by a skilled operator each time the plate/material combination is changed. Not only have the Applicants achieved a way of allowing a machine to be automatically set up, once a "recipe" has been determined for any particular plate material combination they have also created apparatus which could be, at least in part, dynamically controlled, in real time, to self adjust to allow for manufacturing variations in the plates or material.

## Claims

1. An enveloper (10) for creating a material envelope around a battery plate, including an anvil (29) and a rotatable cut-and-crease roller (28) having a knife (35) and a generally diametrically opposed crease blade (36) for acting against the anvil (28) to cut-and-crease material fed through the enveloper (10) **characterised in that** the enveloper (10) further includes a control (57) for varying the rotational velocity of the roller (28) during a rotational cycle to position the crease to form a symmetrical envelope around a plate passing through the enveloper (10).

2. An enveloper (10) as claimed in claim 1 wherein the cut-and-crease roller (28) is driven by a servomotor.

3. An enveloper (10) as claimed in claim 1 or claim 2 wherein the control (57) includes an input for adjusting the rotational velocity to compensate for a "long on top" condition.

4. An enveloper (10) as claimed in any one of the preceding claims wherein the control (57) has an input for adjusting the rotational velocity to compensate for "a short on top" condition.

5. An enveloper (10) as claimed in any one of the preceding claims including a recognition unit for determining the presence of a "long on top" or "short on top" condition and for feeding a respective control signal to the control.

6. An enveloper (10) as claimed in any one of the preceding claims wherein the control (57) includes a memory for retaining a velocity profile for a particular plate/material combination.

7. An enveloper as claimed in Claim 1, including a pair of feed rollers (27) for feeding the material to the anvil (29) and the cut-and-crease roller (28) wherein one of the feed rollers (27a) is driven by a servomotor and the enveloper further includes a control (57) for controlling the rate of rotation of the feed roller (27a) to adjust the length of material formed into an envelope by the enveloping station.

8. An enveloper as claimed in claim 7 where in the control (57) has a memory for retaining the rotational speed appropriate for any material/plate combination.

9. An enveloper as claimed in any one of the preceding Claims wherein the anvil (24) is displacably mounted to allow adjustment of a gap (51) between the anvil (29) and the cut-and-crease (28) roller to vary the depth of crease formed in material fed through the gap.

10. An enveloper as claimed in claim 9 wherein the anvil (29) is pivotally mounted about an axis at a position offset from the gap (51).

11. An enveloper as claimed in claim 10 further including a rotatable eccentric (53) located on the opposite side of the gap from the axis to displace the anvil (29) by rotation about the axis.

12. An enveloper as claimed in claim 11 further including spring means (54) for urging the anvil (29) against the eccentric (53).

13. An enveloper as claimed in claim 11 or claim 12 wherein the eccentric is rotated by a servomotor (54a).

14. An enveloper as claimed in any one of claims 9 to 13 further including a control (57) for adjusting the anvil position, and hence the gap width, to achieve a desired crease depth.

15. An enveloper as claimed in claim 14 wherein the control includes a memory for retaining the anvil positions appropriate for particular materials or material/plate combinations.

16. An enveloper as claimed in any one of the preceding Claims wherein the enveloper includes a pair of feed rollers and an envelope forming station and, further includes a tension roller (30) for tensioning the material prior to cutting and located downstream of the cut-and-crease station but upstream of the envelope forming station.

17. An enveloper as claimed in claim 16 wherein the tension roller is driven by a servomotor or via a feed roller.

18. An enveloper as claimed in claim 16 wherein the servomotor is controlled by a control having a memory for retaining the appropriate tension setting for a particular material.

19. Apparatus for forming groups of battery plates including a first plate supply for supplying successive spaced plates (12) an enveloper as claimed in any one of the preceding Claims for enveloping in material the plates from the first supply (11), a second plate supply (13) for supplying unenveloped plates, to form stacks of an enveloped plate and an unenveloped plate, a conveyor (15) for conveying the stacks to an outlet (16) and a pocket conveyor for receiving multiple stacks from the outlet for forming groups **characterised in that** at least a plurality of the above elements has at least one adjustable feature controlled by a respective servomotor to allow for different plate envelope material combinations and a control (57) for adjusting the servomotors.

20. Apparatus as claimed in claim 19 wherein the control (57) includes a memory for retaining the control settings for each plate/envelope combination used in the apparatus to allow automatic re-setting of the apparatus.

## Patentansprüche

1. Umhüllungseinrichtung (10) zur Erzeugung einer Materialumhüllung um eine Batterieplatte, mit einem Amboss (29) und einer drehbaren Schneid- und Rillwalze (28) mit einem Messer (35) und einer insgesamt diametral gegenüberliegenden Rillklinge (36) für eine Wirkung gegen den Amboss (28), um ein durch die Umhüllungseinrichtung (10) geführtes Material zu schneiden und zu rillen, **dadurch gekennzeichnet, dass** die Umhüllungseinrichtung (10) außerdem eine Steuerung (57) zur Veränderung der Drehgeschwindigkeit der Walze (28) während eines Drehzyklus aufweist, um die Rille so zu positionieren, dass eine symmetrische Umhüllung um eine Platte gebildet wird, die die Umhüllungseinrichtung (10) durchläuft.

2. Umhüllungseinrichtung (10) nach Anspruch 1, bei der die Schneid- und Rillwalze (28) von einem Servomotor angetrieben wird.

3. Umhüllungseinrichtung (10) nach Anspruch 1 oder 2, bei der die Steuerung (57) einen Eingang für eine Einstellung der Drehgeschwindigkeit zur Kompensierung eines "Oben-lang"-Zustands aufweist.

4. Umhüllungseinrichtung (10) nach einem der vorhergehenden Ansprüche, bei der die Steuerung (57) einen Eingang für eine Einstellung der Drehgeschwindigkeit zur Kompensierung eines "Oben-kurz"-Zustands aufweist.

5. Umhüllungseinrichtung (10) nach einem der vorhergehenden Ansprüche, die eine Erkennungseinheit für eine Bestimmung des Vorhandenseins eines "Obenlang"- oder "Oben-kurz"-Zustands und für eine Zufuhr eines jeweiligen Steuersignals an die Steuerung aufweist.

6. Umhüllungseinrichtung (10) nach einem der vorhergehenden Ansprüche, bei der die Steuerung (57) einen Speicher für eine Aufbewahrung eines Geschwindigkeitsprofils für eine bestimmte Platten-/Materialkombination aufweist.

7. Umhüllungseinrichtung nach Anspruch 1, mit einem Paar von Zuführwalzen (27) für eine Zufuhr des Materials zu dem Amboss (29) und der Schneid- und Rillwalze (28), wobei eine der Zufuhrwalzen (27a) von einem Servomotor angetrieben wird und die Umhüllungseinrichtung außerdem eine Steuerung (57) zur Steuerung der Drehzahl der Zuführrolle (27a) aufweist, um die Länge des Materials einzustellen, das durch die Umhüllungsstation zu einer Umhüllung geformt wird.

8. Umhüllungseinrichtung nach Anspruch 7, bei der die Steuerung (57) einen Speicher zur Aufbewahrung der für jegliche Material-/Plattenkombination geeigneten Drehzahl aufweist.

9. Umhüllungseinrichtung nach einem der vorhergehenden Ansprüche, bei der der Amboss (24) verschiebbar angebracht ist, um eine Einstellung einer Lücke (51) zwischen dem Amboss (29) und der Schneid- und Rillrolle (28) zu ermöglichen, um die Tiefe der Rille einzustellen, die in dem Material ausgebildet wird, das durch die Lücke geführt wird.

10. Umhüllungseinrichtung nach Anspruch 9, bei der der Amboss (29) an einer zu der Lücke (51) versetzten Position um eine Achse schwenkbar angebracht ist.

11. Umhüllungseinrichtung nach Anspruch 10, die außerdem einen drehbaren Exzenter (53) aufweist, der von der Achse aus auf der entgegen gesetzten Seite der Lücke angeordnet ist, um den Amboss (29) durch Drehung um die Achse zu verschieben.

12. Umhüllungseinrichtung nach Anspruch 11, die außerdem eine Federeinrichtung (54) aufweist, die den Amboss (29) gegen den Exzenter (53) drückt.

13. Umhüllungseinrichtung nach Anspruch 11 oder Anspruch 12, bei der der Exzenter durch einen Servomotor (54a) gedreht wird.

14. Umhüllungseinrichtung nach einem der Ansprüche 9 bis 13, die außerdem eine Steuerung (57) für eine Einstellung der Ambossposition und daher der Lückenbreite aufweist, um eine gewünschte Rilltiefe zu erreichen.

15. Umhüllungseinrichtung nach Anspruch 14, bei der die Steuerung einen Speicher zur Aufbewahrung der Ambosspositionen aufweist, die für bestimmte Materialien oder Material-/Plattenkombinationen geeignet sind.

16. Umhüllungseinrichtung nach einem der vorhergehenden Ansprüche, bei der die Umhüllungseinrichtung ein Paar von Zuführwalzen und eine Umhüllungsformstation aufweist und außerdem eine Zugwalze (30) aufweist, die das Material vor dem Schneiden spannt und die stromabwärts der Schneid- und Rillstation, jedoch stromaufwärts der Umhüllungsformstation angeordnet ist.

17. Umhüllungseinrichtung nach Anspruch 16, bei der die Zugwalze von einem Servomotor oder über eine Zuführwalze angetrieben wird.

18. Umhüllungseinrichtung nach Anspruch 16, bei der der Servomotor durch eine Steuerung gesteuert wird, die einen Speicher für eine Aufbewahrung der geeigneten Spannungseinstellung für ein bestimmtes Material aufweist.

19. Vorrichtung zur Bildung von Gruppen von Batterieplatten, mit einer ersten Plattenzufuhreinrichtung, die aufeinanderfolgend im Abstand angeordnete Platten (12) zuführt, einer Umhüllungseinrichtung nach einem der vorhergehenden Ansprüche zur Materialumhüllung der Platten von der ersten Zufuhreinrichtung (11), einer zweiten Plattenzufuhreinrichtung (13) für eine Zufuhr nicht-umhüllter Platten, um Stapel aus einer umhüllten Platte und einer nicht-umhüllten Platte zu bilden, einer Fördereinrichtung (15) zur Förderung der Stapel zu einem Auslass (16) und einem Taschenförderer zur Aufnahme mehrerer Stapel von dem Auslass zur Bildung von Gruppen, **dadurch gekennzeichnet, dass** wenigstens eine Vielzahl der oben erwähnten Elemente wenigstens ein einstellbares Merkmal, das durch einen jeweiligen Servomotor gesteuert wird, um unterschiedliche Plattenumhüllungsmaterialkombinationen zu ermöglichen, und eine Steuerung (57) für eine Einstellung der Servomotoren aufweist.

20. Vorrichtung nach Anspruch 19, bei der die Steuerung (57) einen Speicher für eine Aufbewahrung der Steuereinstellungen für jede Platten-/Umhüllungskombination aufweist, die in der Vorrichtung verwendet wird, um eine automatische Wiedereinstellung der Vorrichtung zu ermöglichen.

## Revendications

1. Dispositif d'enveloppement (10) pour créer une enveloppe en matériau autour d'une plaque de batterie, le dispositif comprenant une enclume (29) et un rouleau rotatif de coupe et de pliage (28) comportant un couteau (35) et une lame de pliage (36) globalement diamétralement opposée pour agir contre l'enclume (28) afin de couper et de plier un matériau acheminé à travers le dispositif d'enveloppement (10), **caractérisé en ce que** le dispositif d'enveloppement (10) comprend en outre un dispositif de commande (57) pour faire varier la vitesse de rotation du rouleau (28) pendant un cycle de rotation afin de positionner le pli de manière à constituer une enveloppe symétrique autour d'une plaque passant d'un bout à l'autre du dispositif d'enveloppement (10).

2. Dispositif d'enveloppement (10) selon la revendication 1, dans lequel le rouleau de coupe et de pliage (28) est entraîné par un servomoteur.

3. Dispositif d'enveloppement (10) selon la revendication 1 ou la revendication 2, dans lequel le dispositif de commande (57) comprend une entrée pour le réglage de la vitesse de rotation afin de compenser un état « long sur le dessus ».

4. Dispositif d'enveloppement (10) selon l'une quelconque des revendications précédentes, dans lequel le dispositif de commande (57) comprend une entrée pour le réglage de la vitesse de rotation afin de compenser un état « court sur le dessus ».

5. Dispositif d'enveloppement (10) selon l'une quelconque des revendications précédentes, comprenant une unité de reconnaissance afin de déterminer la présence d'un état « long sur le dessus » ou « court sur le dessus », et de fournir un signal respectif de commande au dispositif de commande.

6. Dispositif d'enveloppement (10) selon l'une quelconque des revendications précédentes, dans lequel le dispositif de commande (57) comprend une mémoire pour conserver un profil de vitesses pour une combinaison plaque / matériau particulière.

7. Dispositif d'enveloppement selon la revendication 1, comprenant une paire de rouleaux d'alimentation (27) pour fournir le matériau à l'enclume (29) et au rouleau de coupe et de pliage (28), et dans lequel l'un (27a) des rouleaux d'alimentation est entraîné par un servomoteur, le dispositif d'enveloppement comprenant en outre un dispositif de commande (57) pour commander la vitesse de rotation du rouleau d'alimentation (27a) afin de régler la longueur du matériau conformé en enveloppe par le poste d'enveloppement.

8. Dispositif d'enveloppement selon la revendication 7, dans lequel le dispositif de commande (57) comprend une mémoire pour conserver la vitesse de rotation appropriée à une combinaison plaque / matériau quelconque.

9. Dispositif d'enveloppement selon l'une quelconque des revendications précédentes, dans lequel l'enclume (24) est montée de manière mobile afin de permettre le réglage d'un écartement (51) entre l'enclume (29) et le rouleau de coupe et de pliage (28) afin de modifier la profondeur du pli formé dans le matériau avancé d'un bout à l'autre de l'écartement.

10. Dispositif d'enveloppement selon la revendication 9, dans lequel l'enclume (29) est montée de manière à pouvoir pivoter autour d'un axe au niveau d'une position décalée par rapport à l'écartement (51).

11. Dispositif d'enveloppement selon la revendication 10, comprenant en outre un excentrique rotatif (53) situé du côté opposé de l'écartement par rapport à l'axe, afin de déplacer l'enclume (29) par une rotation autour de l'axe.

12. Dispositif d'enveloppement selon la revendication 11, comprenant en outre un moyen formant ressort (54) afin de solliciter l'enclume (29) contre l'excentrique (53).

13. Dispositif d'enveloppement selon la revendication 11 ou la revendication 12, dans lequel l'excentrique est entraîné en rotation par un servomoteur (54a).

14. Dispositif d'enveloppement selon l'une quelconque des revendications 9 à 13, comprenant en outre un dispositif de commande (57) pour le réglage de la position de l'enclume et, par conséquent, de la largeur de l'écartement afin d'obtenir une profondeur désirée de pliage.

15. Dispositif d'enveloppement selon la revendication 14, dans lequel le dispositif de commande comprend une mémoire pour conserver les positions de l'enclume, appropriées à des matériaux particuliers ou à des combinaisons plaque / matériau particulières.

16. Dispositif d'enveloppement selon l'une quelconque des revendications précédentes, dans lequel le dispositif d'enveloppement comprend une paire de rouleaux d'alimentation et un poste de formage d'enveloppe, et comprend en outre un rouleau de tension (30) pour tendre le matériau préalablement à la coupe, et situé en aval du poste de coupe et de pliage mais en amont du poste de formage d'enveloppe.

17. Dispositif d'enveloppement selon la revendication 16, dans lequel le rouleau de tension est entraîné par un servomoteur ou par l'intermédiaire d'un rouleau d'alimentation.

18. Dispositif d'enveloppement selon la revendication 16, dans lequel le servomoteur est commandé par un dispositif de commande comprenant une mémoire pour conserver le réglage de tensionnement approprié à un matériau particulier.

19. Appareil prévu pour former des groupes de plaques de batterie, comprenant un premier dispositif d'alimentation en plaques afin de fournir des plaques espacées successives (12), un dispositif d'enveloppement selon l'une quelconque des revendications précédentes, prévu pour envelopper dans un matériau les plaques provenant du premier dispositif d'alimentation (11), un second dispositif d'alimentation en plaques (13) pour fournir des plaques non enveloppées, afin de constituer des empilements constitués par une plaque enveloppée et une plaque non enveloppée, un convoyeur (15) pour l'acheminement des empilements vers un dispositif d'évacuation (16), et un convoyeur à poches pour recevoir, du dispositif d'évacuation, de multiples empilements afin de former des groupes, **caractérisé en ce qu'**au moins une pluralité des éléments ci-dessus mentionnés comporte au moins une caractéristique réglable commandée par un servomoteur respectif pour pouvoir prendre en charge des combinaisons différentes de plaques et de matériaux d'enveloppement, et un dispositif de commande (57) pour le réglage des servomoteurs.

20. Appareil selon la revendication 19, dans lequel le dispositif de commande (57) comprend une mémoire pour conserver les réglages de commande pour chaque combinaison plaque / enveloppe utilisée dans l'appareil afin de permettre une remise automatique de l'appareil à zéro.
